# EUROPEAN PATENT SPECIFICATION

(11) **EP 2 700 338 B1**
(45) Date of publication and mention of the grant of the patent: **16.03.2016**
(21) Application number: 12181201.0
(22) Date of filing: 21.08.2012
(51) Int. Cl.: A47J 31/18, A47J 31/44

(54) **Coffee machine**
Kaffeemaschine
Machine à café

(43) Date of publication of application: 26.02.2014
(73) Proprietor: Display Development and Services Limited, London W1J 6BD (GB)
(72) Inventor: Bazini, Guilad, 76868 Doar-Na Emek Soreq (IL)
(74) Representative: Dennemeyer & Associates S.A.

(56) References cited:
- WO-A2-2004/032695
- WO-A2-2004/069013

## Description

### FIELD AND BACKGROUND OF THE INVENTION

The present invention, in some embodiments thereof, relates to a coffee machine and, more particularly, but not exclusively, to a coffee machine for preparation of Turkish coffee.

Several types of coffee machines are known in the art. The preparation of Turkish coffee usually requires a specific type of coffee machine due to its unique method of preparation. The preparation of Turkish coffee requires slow heating and fast removal of the coffee from the heat when the foam reaches a desired height, before overflow.

EP 1763311 (EP '311) to Arcelik Anonim Sirketi discloses a coffee machine for preparation of Turkish coffee. The coffee machine comprises one or more boiling pots wherein the boiling process is performed, and one or more infrared sensors which are set to detect the initial level of the mixture that is added to the boiling pot to make coffee in amounts according to the cup size and quantity and to compute the froth height limit that every mixture at an initial level will reach after the boiling process, when the coffee is ready. The infrared sensors also decide to actuate and end the boiling process according to its set values. The coffee machine further includes one or more heaters which cut off energy transmission to the boiling pot immediately after the infrared sensor decides to end the boiling process.

EP '311 further discloses resistance type heaters which are lifted upwards to contact the boiling pot to begin the boiling process and, when the infrared sensor detects that the froths reached the desired height and the boiling process should end, contact of the heater with the boiling pot is terminated by moving the heater downwards.

EP 1768533 to Arcelik Anonim Srketi discloses a coffee machine comprising; a detachable water reservoir and a drawer which is slideable on the water reservoir. Water can be added to the water reservoir without moving the reservoir as said drawer is partially pulled out of the coffee machine. When the drawer is completely pulled out, it moves the water reservoir and thus the water reservoir is also taken out.

Additional background art includes EP 1589859, EP 1758489, EP 1758490, EP 1758491, EP 1761152, EP 2077742, EP 2088903, EP 1761149, EP 1906799, EP 1962653, EP 2088904 and EP 2152130 all assigned to Arcelik AS.

### SUMMARY OF THE INVENTION

The inventions relates to a coffee machine as defined in the appended claims.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1A is a schematic illustration of a coffee machine according to some embodiments of the invention;
FIG. 1B is a schematic illustration of the coffee machine of Fig. 1A including boiling pots according to some embodiments of the invention;
FIG. 1C is a cross-sectional illustration of the coffee machine and boiling pots of Fig. 1 B according to some embodiments of the invention;
FIG. 1D is a schematic illustration of a capacitance sensor in accordance with an embodiment of the present invention;
FIG. 1E is a cross-sectional illustration of the capacitance sensor of Fig. 1D utilized with a heater and boiling pot accordance with some embodiments of the invention;
Fig. 1F is a graphic illustration of the sensed capacity by the sensor of Fig. 1 D versus height of the coffee level in accordance with an exemplary embodiment of the invention;
FIG. 2A is a schematic illustration of a boiling pot according to some embodiments of the invention;
FIG. 2B is a cross-sectional illustration of the boiling pot of Fig. 2A according to some embodiments of the invention;
FIG. 2C is an enlarged view of section A of Fig. 2B; 5 FIGS. 3A and 3B are cross-sectional illustrations of the boiling pot of Fig. 2A in a coffee machine in an original and boiling position respectively according to some embodiments of the invention;
FIG. 4A is a schematic illustration of a boiling pot according to some other embodiments of the invention; 10
FIG. 4B is a cross-sectional view of section B of Fig. 4A according to some embodiments of the invention;
FIGS. 5A and 5B are cross-sectional illustrations of the boiling pot of Fig. 3A in a coffee machine in an original and boiling position respectively according to some embodiments of the invention; 15
FIG. 6A is a schematic illustration of a water tank without its cover according to some embodiments of the invention;
FIG. 6B is a cross-sectional illustration of a water tank according to some embodiments of the invention;
FIGS. 7A and 7B are schematic and cross-sectional illustration of a water tank 20 connected to an external reservoir according to some embodiments of the invention; and
FIG. 8 is a flowchart of a method of operation of a coffee machine according to some embodiments of the invention. 25

### DESCRIPTION OF SPECIFIC EMBODIMENTS OF THE INVENTION

The present invention relates to a coffee machine and, more particularly, but not exclusively, to a coffee machine for preparation of Turkish coffee.

While the present invention is described in the context of the preparation of 30 Turkish Coffee, the apparatus as referred to herein relates to any type of hot beverage which is prepared with the coffee machine described herein.

The coffee machine according to the present invention can be used for other type of beverages as well and is not intended to be limited to coffee only.

An aspect of some embodiments of the inventions relates to a coffee machine comprising at least one heater and at least one boiling pot, wherein the boiling pot is moved down to contact the heater during the boiling process.

The coffee machine, according to some embodiments of the invention, comprises at least one boiling pot for insertion into at least one boiling chamber. The boiling chamber comprises a lid for covering the boiling pot and a heater at the bottom, between which a boiling pot is placed. Optionally, the heater is stationary. The coffee machine further comprises a controller for controlling the boiling process.

In some embodiments, the heater is an induction type heater which does not immediately cool off when turned off. In these embodiments, the boiling pot is brought into contact with the heater only during the boiling process and is removed from contact with the heater when the heating process is completed.

According to some embodiments, the boiling pot is moved down to contact the heater during the boiling process and is moved up after the boiling process is completed. Optionally, a solenoid or other means is provided in the lid of the boiling pot which pushes the cup down for boiling, when instructed by the controller.

In some embodiments, the boiling pot comprises a spring based ring surrounding the bottom plate of the pot. The heater optionally comprises protrusions matching the spring based ring of the pot. When placed in the boiling pot, the boiling pot is held by the protrusions surrounding the heater and the bottom surface of the pot does not contact the heater. During the boiling process, the solenoid pushes the pot downwards thereby forcing the liquid containing portion of the pot past the spring based ring around the bottom surface of the pot such that the bottom surface of the pot contacts the heater. After the boiling process is completed, the solenoid releases the pot such that the spring based ring returns to its original position and the bottom surface of the pot is held by the protrusions around the heater and does not contact the heater.

Alternatively, the heater is a resistance type heater which cools off quickly when turned off. In these embodiments, the boiling pot can continuously contact the heater when in the coffee machine and will be heated substantially only during the boiling process.

In some embodiments of the invention, a temperature sensor is provided on the lid of the boiling chamber which transfers temperature information to the controller. The temperature sensor senses the temperature of the vapor at the top of or exiting the boiling pot and the controller decides to stop the boiling process when the vapor reached a desired temperature, for example between about 60°C-80°C or 65°C-75°C, such as about 70°C.

In some embodiments of the invention, additional safety means is provided for detecting overflow of the coffee when the temperature sensor or controller is defective.

An aspect of some embodiments of the invention relates to a coffee machine, comprising a capacitance sensor for detection of imminent and/or actual overflow. In some embodiments, the capacitance sensor is provided in the lid of the boiling chamber and detects the capacitance between the sensor and the heater below the boiling pot. When imminent or actual overflow is sensed, by an increase in capacitance which indicates rise of liquid level in the boiling pot, the sensor signals the controller to stop the boiling process. Optionally, an alert is displayed or an alarm is sounded.

In some embodiments of the invention, the capacitance sensor comprises a plate connected to a stud positioned in the top lid of the boiling chamber. The plate is adapted to measure the capacitance between the heater at the bottom of the boiling chamber and the stud. As the coffee level in the boiling pot rises, the coffee level approaches the plate and the sensed capacity increases.

In some embodiments of the invention, the user places coffee and sugar in the boiling pot and selects the amount of coffee to be prepared (one cup, two cups, three cups, etc.). Optionally, the user indicates this amount to the machine using an interface thereof. Water is then pumped from a water tank to the boiling pot in accordance with the amount selected by the user. In some embodiments, the water tank is removable for filling. In other embodiments, the water tank is fixed in the machine and is filled while in the machine.

An aspect of some embodiments of the invention relates to a coffee machine comprising a water tank which can be connected to an external reservoir for filling of the water tank. In some embodiments, the water tank comprises a port connectable to an external water supply. Optionally, the port is at a side of the water tank. Alternatively or additionally, a port is provided at the top of the water tank. Optionally, the water tank is not removable without use of at least a screwdriver. Optionally, the water tank is integrated in the coffee machine and is not removable without causing damage to the coffee machine. Optionally, the water tank is not removable without disassembling the coffee machine.

In some embodiments, a water pipe is connected between the port and a pump of an external reservoir. When instructed, the pump pumps water through the pipe into the internal tank of the coffee machine. Optionally, a controller is provided which automatically instructs the pump to fill the internal tank when the internal tank reached a low limit. Alternatively, a user manually instructs or pumps water from the reservoir to the internal tank, optionally after receiving an alert by the coffee machine. In some embodiments, the internal tank is connected to the reservoir only for filling. In other embodiments, the internal tank is always connected to the reservoir.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

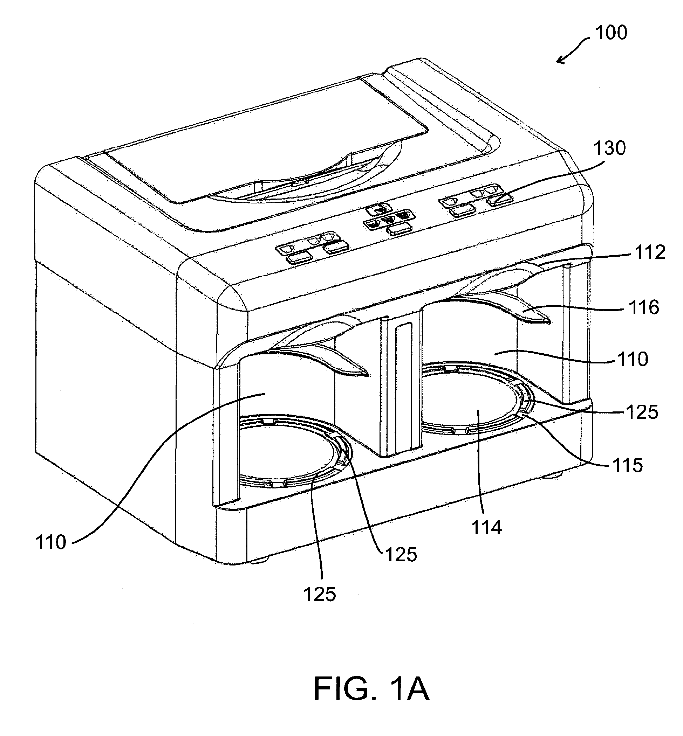

Referring now to the drawings, Fig. 1A schematically illustrates a coffee machine 100 in accordance with an exemplary embodiment of the invention. Coffee machine 100 includes two boiling chambers 110. It is noted that according to various embodiments of the invention, one, three or more boiling chambers can be provided. Optionally, all boiling chambers have the same size. Alternatively, different boiling chambers have different sizes and are configured to prepare different amounts of coffee.

Boiling chamber 110 includes a lid 112 and a heater 114 at the bottom, between which a boiling pot can be received. Lid 112 covers a boiling pot inserted in the boiling chamber. Heater 114 is preferably stationary and may be connected by a silicon gasket 115 to the boiling chamber. Optionally, silicon gasket 115 seals the heater such that no liquid can flow to electric connections under the heater.

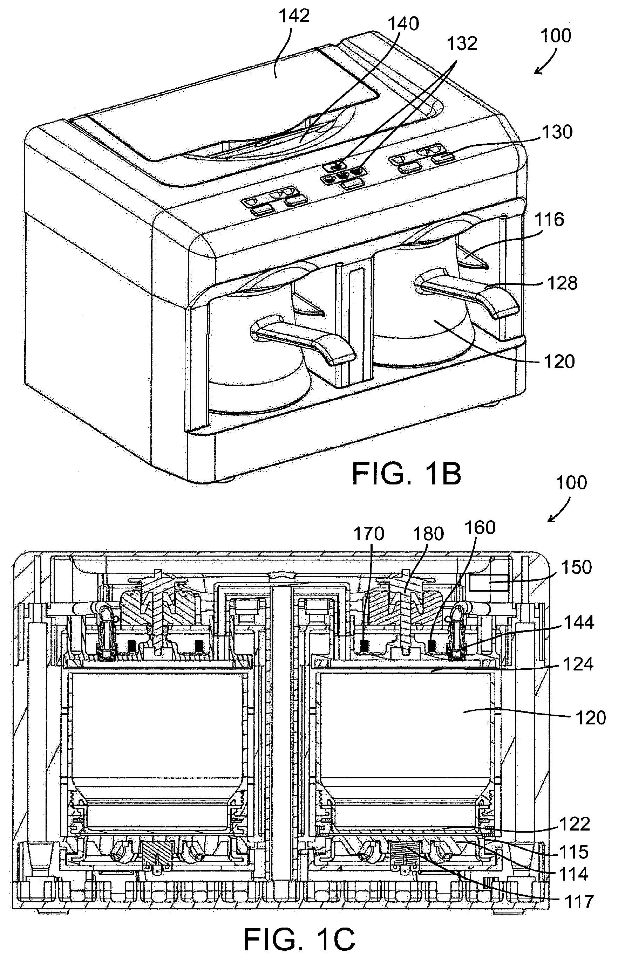

Fig. 1B is a schematic illustration of coffee machine 100 including two boiling pots 120 positioned in boiling chambers 110. Fig. 1C is a cross-section of coffee machine 100 with boiling pots 120. As shown in Fig. 1C, silicon gasket 115 prevents overflowing liquid from contacting electrical connections 117 under heater 114.

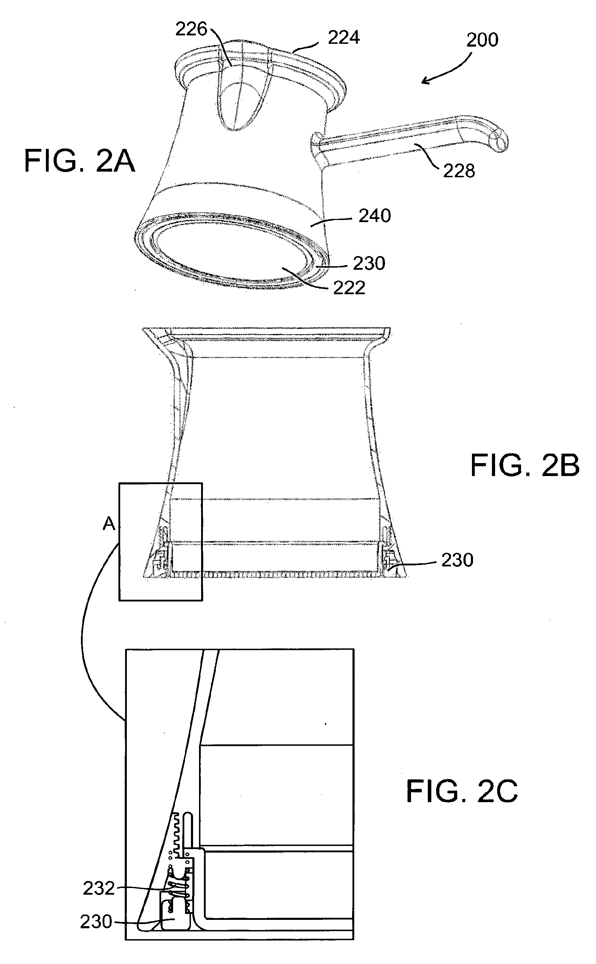

Boiling pot 120 includes a bottom surface 122 adapted to be heated by heater 114. Top 124 of boiling pot 120 is open and can be partially or completely covered by lid 112 of boiling chamber 110. Boiling pot 120 may also include a handle 128 for holding the cup. The handle is preferably made of a material that is not heated with the pot. Boiling pots in Figs. 1B and 1C are exemplary only and specific boiling pots according to exemplary embodiments of the invention will be detailed with respect to Figs. 2-5 below. In some embodiments, a boiling pot is sized to contain a single cup of coffee. In other embodiments, the boiling pot is sized to contain two, three or more cups of coffee.

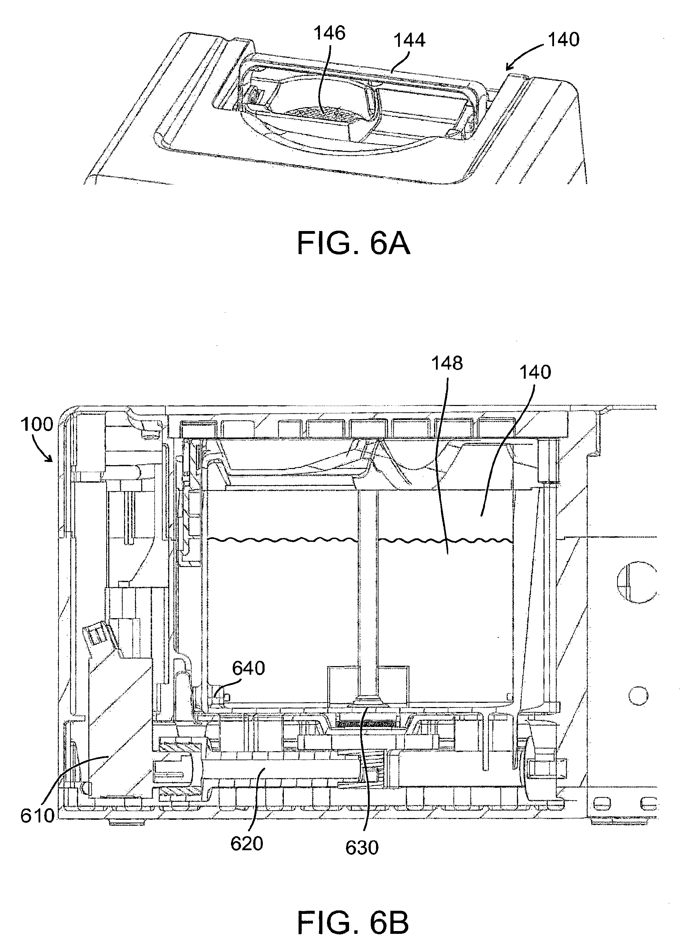

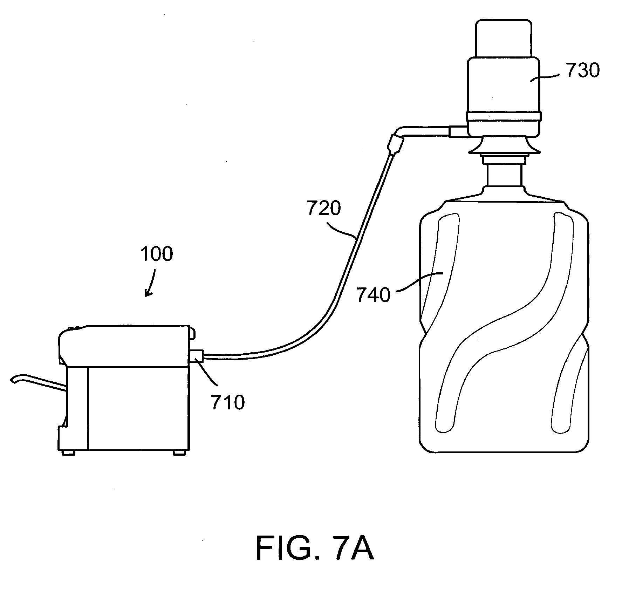

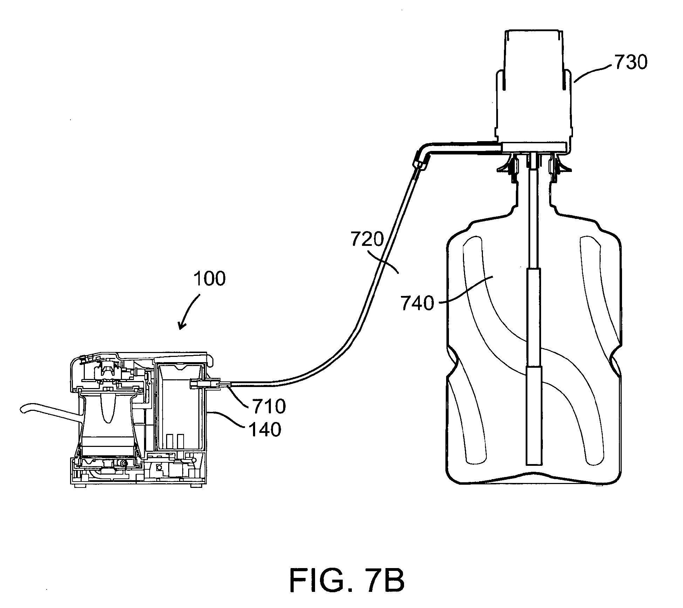

A control panel 130 is provided for input selection by a user. Optionally, the control panel also includes one or more displays for displaying information to the user. A controller is also provided (schematically shown as 150 in Fig. 1C) for controlling the boiling process. Coffee machine 100 further includes a water tank 140, optionally having an openable cover 142, connected to a water nozzle 144 for transferring water into boiling pot 120. A detailed description of water tank 140 in accordance with exemplary embodiments of the invention is provided with respect to Figs. 6 and 7 below.

A temperature sensor 160 is optionally provided for sensing the temperature of the vapor at the top of or exiting opening 124 of boiling pot 120. I some embodiments, the temperature sensor and the controller act as a thermostat. In other embodiments, the temperature sensor is replaced by a thermostat and signals to the controller when the vapor reaches a predefined temperature.

In some embodiments, a capacitance sensor 170 is also provided for sensing the capacity between heater 114 and sensor 170. Capacitance sensor 170 is adapted to indicate imminent or actual overflow when sensing an increase in capacity of the vapor or foam.

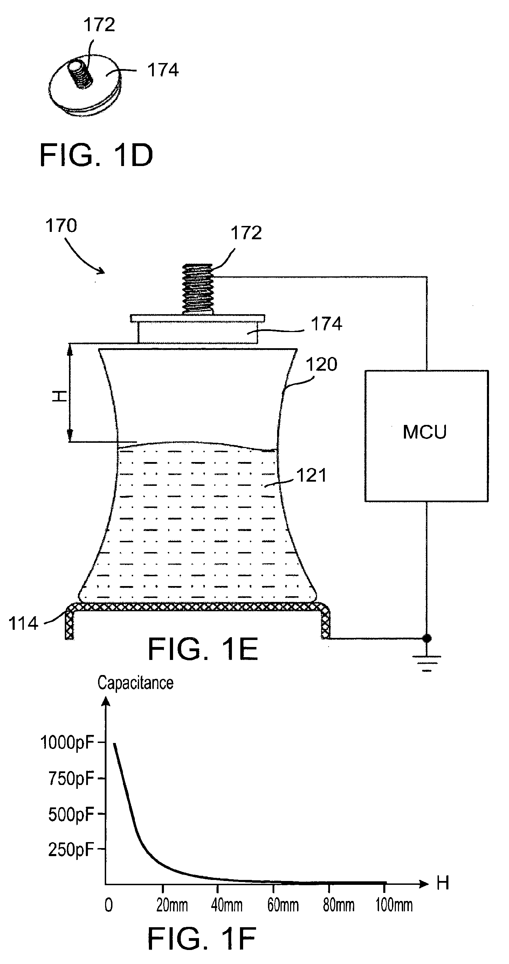

Fig. 1D is a schematic illustration of a capacitance sensor 170 in accordance with an exemplary embodiment of the invention. Sensor 170 includes a stud 172 to which a plate 174 is attached. Fig. 1E is a schematic illustration of sensor 170 with boiling pot 120 and heater 114 as referred to above. Plate 174 is positioned on top of boiling pot 120 which is filled with coffee 121. Plate 174 is adapted to measure the capacity between heater 114 and stud 172. H represents the distance between coffee level 121 and plate 174. During heating, coffee level 121 raises and H decreases leading to an increase in the measured capacity. Fig. 1F is a graphic illustration of the increase in capacity when H decreases.

The boiling process is stopped, optionally by the controller, when the measured capacity reaches a predetermined capacity which indicates imminent or actual overflow of the coffee 121.

In some embodiments, heater 114 is an induction type heater which does not immediately cool off when turned off. In these embodiments, the boiling pot is brought into contact with the heater only during the boiling process. A solenoid 180 is optionally provided for changing the position of boiling pot 120 in chamber 110. For example solenoid 180 may push boiling pot 120 down into a boiling position wherein bottom surface 122 contacts heater 114 and release pot 120 back to its original position after the boiling process. Elements 114, 130, 140, 150, 160, 170 and 180 are optionally connected to and controlled by controller 150.

Fig. 2A is a schematic illustration of a boiling pot 200 in accordance with an exemplary embodiment of the invention adapted to contact the heater only during the boiling process. Boiling pot 200 includes a bottom surface 222 adapted to be heated by heater 114. Top 224 of boiling pot 200 is open and optionally includes a venting cap 226 for release of vapor or for release of foam when overflow occurs. Cap 226 can also assist in pouring the beverage into cups after preparation. Boiling pot 200 may also include a handle 228 for holding the cup. The handle is preferably made of a material that is not heated excessively with the pot.

Bottom surface 222 of boiling pot 200 is optionally surrounded by a spring based ring 230. Fig. 2B is a cross-section of boiling pot 200 and Fig. 2C is an enlarged view of section A of Fig. 2B, showing a spring 232 holding ring 230.

Gasket 115 surrounding heater 114 is optionally provided with protrusions 125 matching ring 200 (as shown in Fig. 1A for example). When boiling pot 200 is positioned in boiling chamber 110, ring 230 is positioned on protrusions 125 and bottom surface 222 of boiling pot 200 does not contact heater 114. Optionally, the boiling chamber further includes a positioning element 116 (Fig. 1A) for assisting in correctly placing a boiling pot in the boiling chamber, for example such that ring 230 will be placed on protrusions 125 in the boiling chamber.

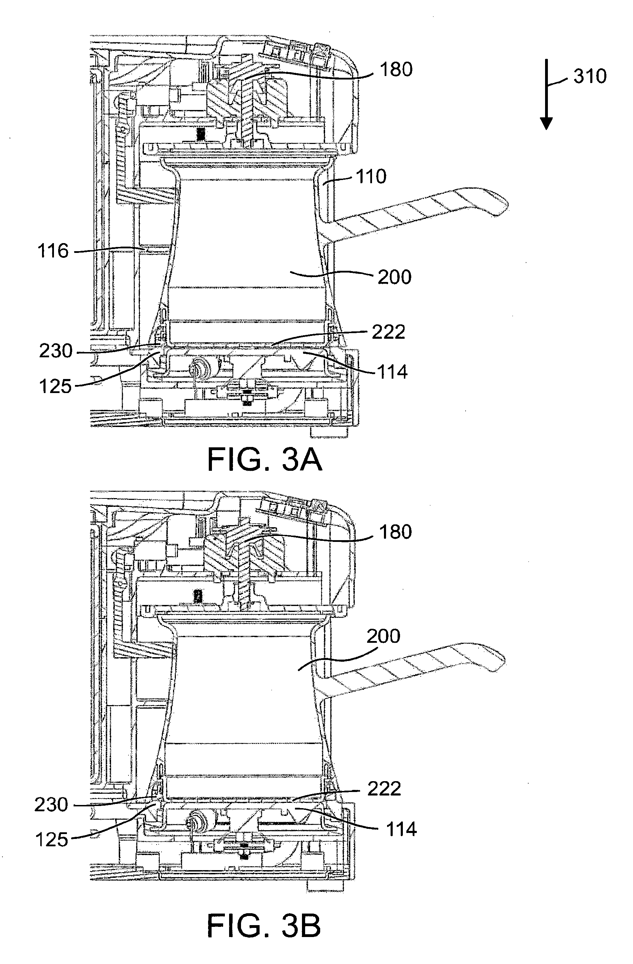

Fig. 3A is a cross section of boiling chamber 110 with boiling pot 200 in its starting position, when bottom surface 222 of the pot does not contact heater 114. Ring 230 is positioned on protrusions 125. In the starting position, bottom surface 222 is substantially aligned with ring 230.

Means such as a solenoid 302 is provided in lid 112 of the boiling chamber for pushing pot 200 downwards in a direction 310. Fig. 3B schematically illustrates boiling pot 200 in a boiling position, after being pushed down, where bottom surface 222 contacts heater 114. In the boiling position, ring 230 is positioned on a different plane than bottom surface 222.

In some embodiments, a protective sealing 240 is provided around the bottom part of the pot, in order to prevent a user from being burned by the hot pot. Sealing 240 may be made of thermoplastic elastic materials or other suitable material.

Boiling pot 200 shown in Figs. 2 and 3 may harm a surface on which it is positioned after boiling. Bottom surface 222 does not immediately cool off after boiling and when positioned on a surface such as a table, it contacts the table surface and may harm the table surface.

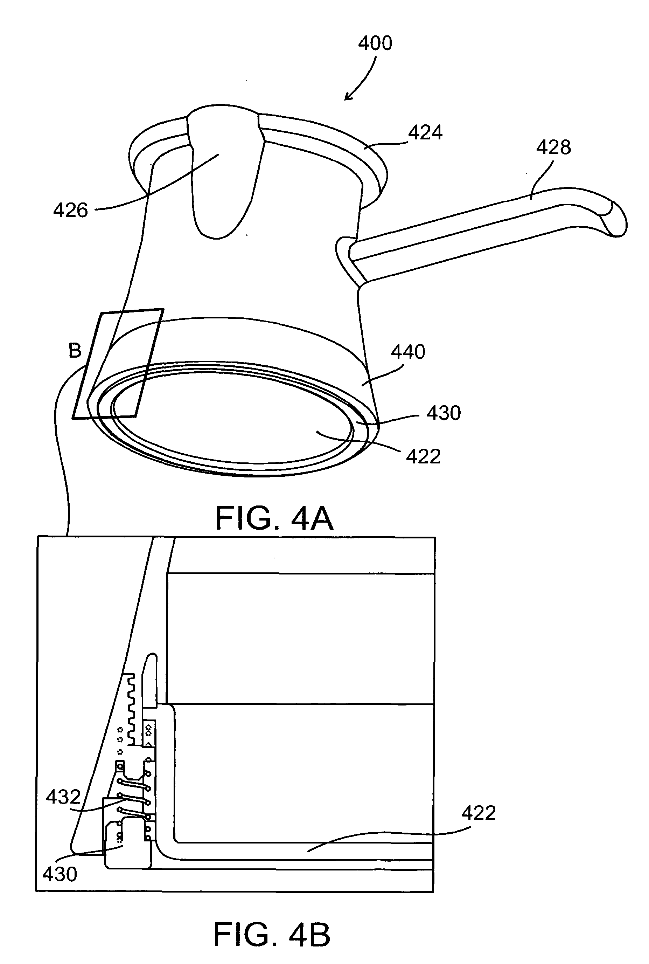

Fig. 4A illustrates a boiling pot 400 in accordance with another embodiment of the invention, where a bottom surface 422 of the boiling pot does not contact a flat surface on which it is positioned. A spring based ring 430 is provided, surrounding bottom surface 422. Fig. 4B is an enlarged cross-section of section B in Fig. 4A, showing ring 430 held by a spring 432.

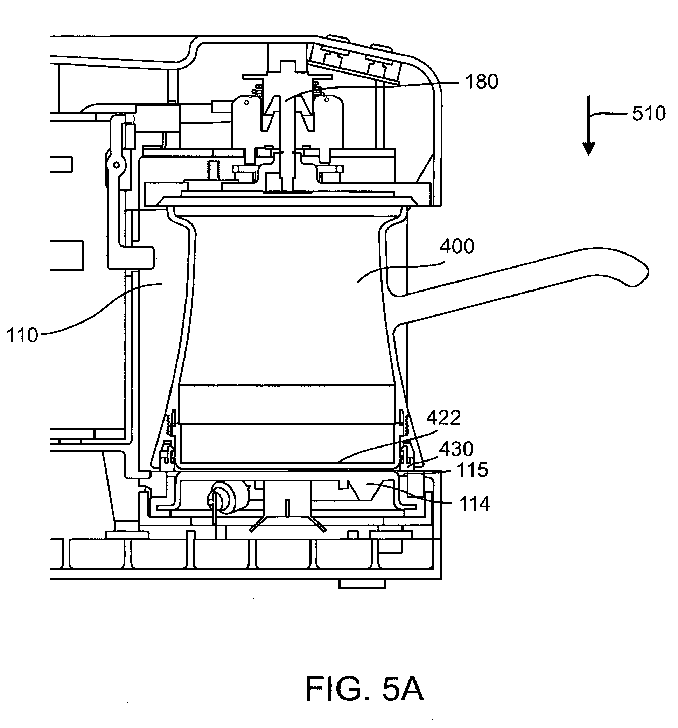

Fig. 5A schematically illustrates boiling pot 400 placed in boiling chamber 110 in a starting position, where bottom surface 422 does not contact heater 114. In the starting position, boiling pot is supported by ring 430 which is positioned on gasket 115. Ring 430 and bottom surface 422 are provided on different planes in the starting position of boiling pot 400.

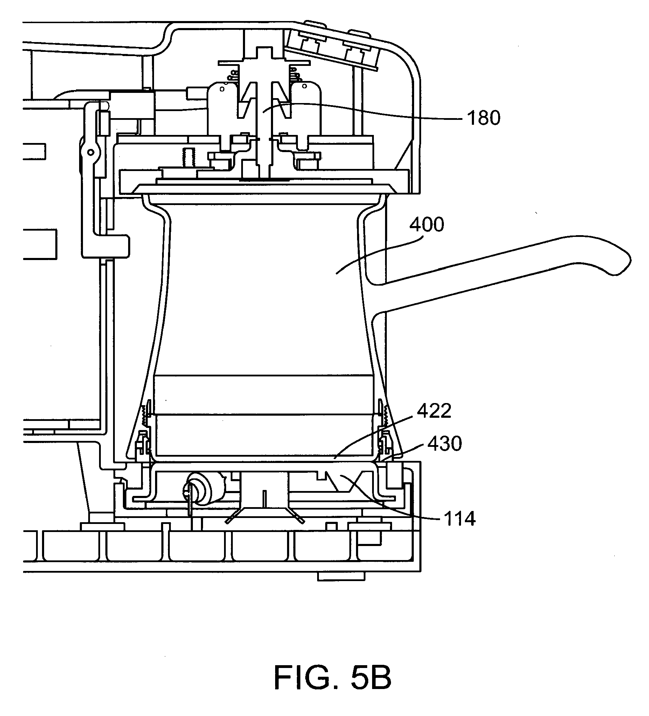

Fig. 5B schematically illustrates boiling pot 400 in a boiling position, after being pushed down by solenoid 180 in direction 510. Spring 432 is compressed and ring 430 aligns with bottom surface 422 such that bottom surface 422 contacts heater 114. It is noted that with boiling pot 400, no protrusions are provided on gasket 115.

Boiling pot 400 preferably further includes an upper opening 424, a venting cap 426, a handle 428 and a protective sealing 440, similar to elements 224, 226, 228 and 240 shown and described with respect to Fig. 2A.

In some other embodiments of the invention, heater 114 is a resistance type heater which cools off quickly when turned off. In these embodiments, the boiling pot can contact the heater when in the coffee machine and will be heated only during the boiling process. The bottom surface of boiling pot 120 can be a flat surface. In some embodiments, the bottom surface of the pot does not immediately cool off after boiling and may harm a surface on which it is positioned after boiling.

Referring now to water tank 140 of coffee machine 100, Fig. 6A is a schematic illustration of water tank 140 without its cover 142. In some embodiments, water tank 140 is removable from coffee machine 100 for filling. Optionally, a handle 144 is provided for pulling water tank 140 out of machine 100. In other embodiments, water tank 140 is stationary and is filled while in coffee machine 100. One or more openings 146 are optionally provided on the top of water tank 140 for filling the tank.

Fig. 6B is a cross-sectional illustration of the back side of coffee machine 100 showing water tank 140 in coffee machine 100. Water tank 140 is partially filled with water 148. A pump 610 is provided for pumping water 148 from tank 140, through a valve 630 into pipe 620, and eventually through nozzle 144 (Fig. 1C) into the boiling pot.

A sensor 640 is optionally provided for sensing the water level of the tank and signaling to the user when the water level reaches a low limit and water needs to be added to the tank. Optionally, sensor 640 is a capacitance sensor. Alternatively, sensor 640 can be other sensors known in the art. Optionally, when the water level reaches a low limit, no water is pumped by pump 610 into the boiling pot.

Valve 630 is preferably positioned below sensor 640 such that air bubbles that might mix with water 148 rise automatically above valve 630 due to the density difference and will not be pumped.

In some embodiments of the invention, water can be pumped through an external tube into the water tank. Fig. 7A schematically illustrates coffee machine 100 having an inlet port 710 at a side of water tank 140. Fig. 7B is a cross-sectional illustration of the embodiment shown in Fig. 7A. An optional tube 720 may connect between inlet 710 and an external water reservoir 740. Optionally, external water reservoir 740 can be replaced by an ordinary water tap (not shown).

In some embodiments, tube 720 can be connected to an inlet on the top of the tank, for example to inlet 146 shown in Fig. 6A.

In some embodiments, a pump 730 can be provided between tube 720 and reservoir 740 for pumping water from external reservoir 740 through inlet 710 and optionally tube 720 into tank 140. In some embodiments, pump 730 is a manual pump operated by a user when a signal that the water tank is to be refilled is received. Optionally, inlet 710 is connected to external reservoir 740 only for filling of the water tank.

Alternatively, water tank 140is automatically refilled when sensor 640 (Fig. 6B) indicates that the water level in tank 140 is below a predefined level. In these embodiments, pump 730 may be an automatic pump, controlled by controller 150.

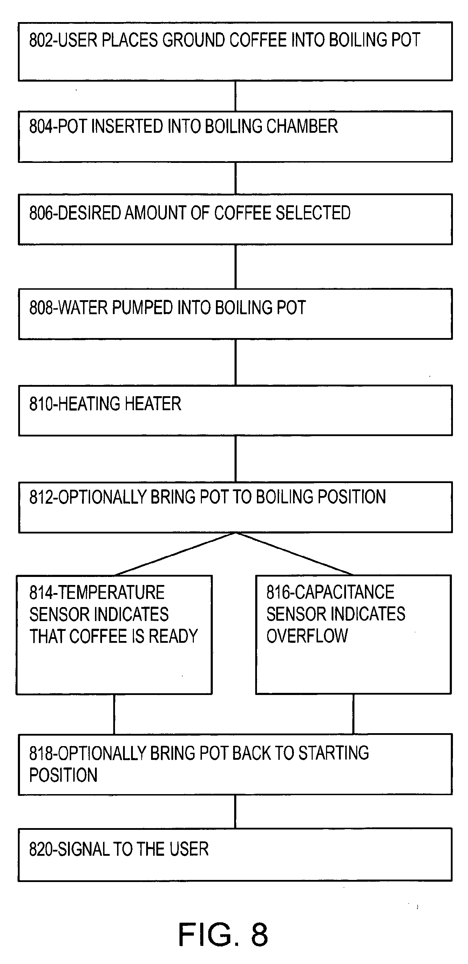

Fig. 8 is a flowchart of a method of operation of coffee machine 100 in accordance with an exemplary embodiment of the invention. The method below is suitable to be used for any of the embodiments shown in Figs. 1-7, or a further embodiment combining features of the embodiments of Figs. 1-7.

At 802 a user puts ground coffee and optionally also sugar in a boiling pot. The user then inserts the pot into boiling chamber 110 at 804 and selects the amount of coffee desired at 806, optionally by using control panel 130. For example, the user may choose between one cup, two cups, three cups etc. In some embodiments, the amount of coffee is automatically detected by the coffee machine. For example, each boiling chamber may be adapted to boil a specific amount of coffee, or the coffee machine can detect the amount of coffee desired according to the size of boiling pot inserted. In other embodiments, the user also puts a suitable amount of water into the boiling pot. In some embodiments, the same coiling process is used for different amounts of coffee prepared.

At 808, controller 150 instructs water to be pumped from water tank 140 into the boiling pot according to the selected amount. At 810 the controller starts the boiling process by heating heater 114. In some embodiments, the heater is heated before starting the boiling process, for example when the boiling pot is inserted into the boiling chamber, in order for the heater to be at the right temperature when the boiling pot is brought in contact with the heater. Optionally, at 812, the controller instructs solenoid 180 to move the boiling pot from a starting position to a boiling position, for example as shown in Figs. 3B and 5B, so that the bottom surface of the boiling pot contacts the heater.

Generally, the controller will end the boiling process when the temperature sensor indicates that the vapor on the top of the pot has reached a predefined temperature at 814. For example, when the vapor has reached a temperature of between about 60°C-80°C, for example about 70°C. The predefined temperature is preferably selected to a temperature just below boiling point of the coffee, such that the coffee will be covered with foam, but will not overflow. Optionally, the predefined temperature is identical for all types and/or amounts of coffee.

Alternatively, the boiling process ends when the capacitance or other sensor indicates imminent or actual overflow at 816. This will generally occur when the temperature sensor or controller is faulty. When the boiling process ends by indication of overflow, the coffee will generally be discarded.

The boiling process ends by the controller turning heater 114 off and/or by bringing the boiling pot back to its starting position, at 818. Optionally, upon instructions from the controller, the solenoid releases the boiling pot and the boiling pot returns to its starting position where the bottom surface of the pot does not contact the heater, for example as shown in Fig. 3B and 5B.

At 820 a signal is provided to the user, either that the coffee is ready, or, when the boiling process ended based on instructions from the overflow sensor, that the machine is at fault and should be repaired. Optionally the signal is provided on a display on the control panel. Alternatively or additionally, the signal is provided by generating a sound.

As used herein the term "about" refers to ± 10 %

## Claims

1. A coffee machine (100) comprising:
at least one boiling chamber (110) for receiving a boiling pot;
a water tank (140) comprising a port (710) connectable to an external water supply (740) for filling water in the water tank;
a heater (114) at the bottom of the at least one boiling chamber (110);
at least one boiling pot (120) for insertion into the at least one boiling chamber (110) in a starting position, the boiling pot (110) having a liquid containing portion comprising a bottom surface; and
means for selectively moving the boiling pot (120) within the boiling chamber between a boiling position at which the bottom surface (122) contacts the heater (114) and a starting position at which the bottom surface (122) of the boiling pot (120) does not contact the heater (114),
wherein said means move the boiling pot (120) towards the heater (114) for movement of the boiling pot (120) from the starting position into the boiling position, and said means move the boiling pot (120) away from the heater for movement of the boiling pot from the boiling position into the starting position.

2. A coffee machine according to claim 1, wherein the port is at a side of the water tank.

3. A coffee machine according to claim 1 or claim 2 wherein the water tank comprises an additional port at the top of the water tank for filling water in the water tank.

4. A coffee machine according to any of the preceding claims, wherein the water tank is integrated in the coffee machine and is not removable without causing damage to or disassembling the coffee machine.

5. A coffee machine according to any of the preceding claims, further comprising a sensor (640) for sensing when water in the water tank reaches a low limit.

6. A coffee machine according to any of the preceding claims, further comprising a water pump (730) connected between said port and an external water supply.

7. A coffee machine according to claim 6, further comprising a controller (150) for automatically filling the water tank by activating said pump when the water tank reached a low limit.

8. A coffee machine according to any of the preceding claims, wherein said means for moving comprises a solenoid (180).

9. A coffee machine according to any of the preceding claims, further comprising a controller (150) for controlling said means to move the boiling pot to the boiling position and release the boiling pot back to the starting position.

10. A coffee machine according to any of the preceding claims, wherein the boiling pot comprises a spring based ring (230) surrounding the bottom surface and the heater comprises one or more protrusions (125) matching said ring wherein in the starting position, the boiling pot is held by said protrusions.

11. A coffee machine according to claim 10, wherein said means are configured to push the boiling pot downwards thereby forcing the liquid containing portion of the pot past the spring based ring around the bottom surface of the pot such that the bottom surface of the pot contacts the heater.

12. A coffee machine according to any of the preceding claims, wherein the at least one boiling chamber further comprises:
an overflow sensor for sensing overflow from the boiling pot.

13. A coffee machine according to claim 12, wherein the at least one boiling chamber further comprises:
a lid (112) for covering the boiling pot,
wherein the overflow sensor is provided at the lid of the chamber.

14. A coffee machine according to claim 12 or claim 13, wherein the overflow sensor is a capacitance sensor (170) for sensing capacitance between the heater and the capacitance sensor.

15. A coffee machine according to any of claims 12-14, further comprising a temperature sensor (160) at the lid of the chamber for sensing the temperature of the vapor exiting the boiling pot and a controller for controlling a boiling process, wherein the controller is adapted to stop the boiling process when the temperature sensor senses that the vapor has reached a predetermined temperature or when the overflow sensor senses overflow.

## Patentansprüche

1. Kaffeemaschine (100), die umfasst:
zumindest eine Kochkammer (110) zur Aufnahme eines Kochkessels;
einen Wassertank (140), der eine Öffnung (710) umfasst, die mit einer externen Wasserversorgung (740) verbindbar ist, um Wasser in den Wassertank zu füllen;
eine Heizvorrichtung (114) am Boden der zumindest einen Kochkammer (110);
zumindest einen Kochkessel (120) zum Einsetzen in die zumindest eine Kochkammer (110) in einer Ausgangsposition, wobei der Kochkessel (110) einen flüssigkeitshaltigen Abschnitt aufweist, der eine Bodenfläche umfasst; und
ein Mittel zum selektiven Bewegen des Kochkessels (120) innerhalb der Kochkammer zwischen einer Kochposition, in der die Bodenfläche (122) die Heizvorrichtung (114) berührt, und einer Ausgangsposition, in der die Bodenfläche (122) des Kochkessels (120) die Heizvorrichtung (114) nicht berührt,
wobei das Mittel den Kochkessel (120) hin zur Heizvorrichtung (114) bewegt, um den Kochkessel (120) von der Ausgangsposition in die Kochposition zu bewegen, und wobei das Mittel den Kochkessel (120) von der Heizvorrichtung wegbewegt, um den Kochkessel von der Kochposition in die Ausgangsposition zu bewegen.

2. Kaffeemaschine nach Anspruch 1, wobei die Öffnung an einer Seite des Wassertanks liegt.

3. Kaffeemaschine nach Anspruch 1 oder 2, wobei der Wassertank eine weitere Öffnung an der Oberseite des Wassertanks zum Füllen von Wasser in den Wassertank umfasst.

4. Kaffeemaschine nach einem der vorstehenden Ansprüche, wobei der Wassertank in die Kaffeemaschine integriert und nicht ohne Gehäuseschaden oder Zerlegen der Kaffeemaschine entfernbar ist.

5. Kaffeemaschine nach einem der vorstehenden Ansprüche, die des Weiteren einen Sensor (640) umfasst, um zu erfassen, wenn das Wasser im Wassertank einen unteren Grenzwert erreicht.

6. Kaffeemaschine nach einem der vorstehenden Ansprüche, die des Weiteren eine Wasserpumpe (730) umfasst, die zwischen der Öffnung und einer externen Wasserversorgung angeschlossen ist.

7. Kaffeemaschine nach Anspruch 6, die des Weiteren eine Steuereinheit (150) umfasst, um den Wassertank durch Aktivieren der Pumpe automatisch zu füllen, wenn der Wassertank einen unteren Grenzwert erreicht hat.

8. Kaffeemaschine nach einem der vorstehenden Ansprüche, wobei das Mittel zum Bewegen eine Magnetspule (180) umfasst.

9. Kaffeemaschine nach einem der vorstehenden Ansprüche, die des Weiteren eine Steuereinheit (150) umfasst, um das Mittel so zu steuern, dass es den Kochkessel in die Kochposition bewegt und den Kochkessel zurück in die Ausgangsposition freigibt.

10. Kaffeemaschine nach einem der vorstehenden Ansprüche, wobei der Kochkessel einen federbelasteten Ring (230) umfasst, der die Bodenfläche umgibt, und wobei die Heizvorrichtung einen oder mehrere Vorsprünge (125) umfasst, die zum Ring passen, wobei der Kochkessel in der Ausgangsposition von den Vorsprüngen gehalten wird.

11. Kaffeemaschine nach Anspruch 10, wobei das Mittel so konfiguriert ist, dass es den Kochkessel nach unten schiebt, wodurch der flüssigkeitshaltige Abschnitt des Kessels an dem federbelasteten Ring um die Bodenfläche des Kessels herum vorbeigezwungen wird, so dass die Bodenfläche des Kessels die Heizvorrichtung berührt.

12. Kaffeemaschine nach einem der vorstehenden Ansprüche, wobei die zumindest eine Kochkammer des Weiteren umfasst:
einen Überlaufsensor zum Erfassen eines Überlaufens aus dem Kochkessel.

13. Kaffeemaschine nach Anspruch 12, wobei die zumindest eine Kochkammer des Weiteren umfasst:
einen Deckel (112) zum Abdecken des Kochkessels,
wobei der Überlaufsensor am Deckel der Kammer bereitgestellt ist.

14. Kaffeemaschine nach Anspruch 12 oder 13, wobei der Überlaufsensor ein kapazitiver Sensor (170) zum Erfassen einer Kapazität zwischen der Heizvorrichtung und dem kapazitiven Sensor ist.

15. Kaffeemaschine nach einem der Ansprüche 12 bis 14, die des Weiteren einen Temperatursensor (160) am Deckel der Kammer zum Erfassen der Temperatur des aus dem Kochkessel austretenden Dampfs und eine Steuereinheit zum Steuern eines Kochprozesses umfasst, wobei die Steuereinheit so ausgelegt ist, dass sie den Kochprozess stoppt, wenn der Temperatursensor erfasst, dass der Dampf eine vordefinierte Temperatur erreicht hat, oder wenn der Überlaufsensor ein Überlaufen erfasst.

## Revendications

1. Machine à café (100) comprenant :
au moins une chambre d'ébullition (110) pour recevoir un récipient d'ébullition ;
un réservoir d'eau (140) comprenant un orifice (710) pouvant être raccordé à une alimentation en eau extérieure (740) pour verser l'eau dans le réservoir d'eau ;
un dispositif de chauffage (114) au fond de la au moins une chambre d'ébullition (110) ;
au moins un récipient d'ébullition (120) pour l'insertion dans la au moins une chambre d'ébullition (110) dans une position de démarrage, le récipient d'ébullition (110) ayant une partie de confinement de liquide comprenant une surface inférieure ; et
des moyens pour déplacer sélectivement le récipient d'ébullition (120) à l'intérieur de la chambre d'ébullition entre une position d'ébullition dans laquelle la surface inférieure (122) est en contact avec le dispositif de chauffage (114) et une position de démarrage dans laquelle la surface inférieure (122) du récipient d'ébullition (120) n'est pas en contact avec le dispositif de chauffage (114),
dans laquelle lesdits moyens déplacent le récipient d'ébullition (120) vers le dispositif de chauffage (114) pour faire passer le récipient d'ébullition (120) de la position de démarrage à la position d'ébullition, et lesdits moyens éloignent le récipient d'ébullition (120) du dispositif de chauffage pour faire passer le récipient d'ébullition de la position d'ébullition à la position de démarrage.

2. Machine à café selon la revendication 1, dans laquelle l'orifice est au niveau d'un côté du réservoir d'eau.

3. Machine à café selon la revendication 1 ou la revendication 2, dans laquelle le réservoir d'eau comprend un orifice supplémentaire au sommet du réservoir d'eau pour verser l'eau dans le réservoir d'eau.

4. Machine à café selon l'une quelconque des revendications précédentes, dans laquelle le réservoir d'eau est intégré dans la machine à café et ne peut pas être retiré sans endommager ni démonter la machine à café.

5. Machine à café selon l'une quelconque des revendications précédentes, comprenant en outre un capteur (640) pour détecter le moment où l'eau dans le réservoir d'eau atteint une limite inférieure.

6. Machine à café selon l'une quelconque des revendications précédentes, comprenant en outre une pompe à eau (730) raccordée entre ledit orifice et une alimentation en eau extérieure.

7. Machine à café selon la revendication 6, comprenant en outre un organe de commande (150) pour remplir automatiquement le réservoir d'eau en activant ladite pompe lorsque le réservoir d'eau a atteint une limite inférieure.

8. Machine à café selon l'une quelconque des revendications précédentes, dans laquelle lesdits moyens de déplacement comprennent un solénoïde (180).

9. Machine à café selon l'une quelconque des revendications précédentes, comprenant en outre un organe de commande (150) pour commander lesdits moyens afin de déplacer le récipient d'ébullition dans la position d'ébullition et ramener le récipient d'ébullition dans la position de démarrage.

10. Machine à café selon l'une quelconque des revendications précédentes, dans laquelle le récipient d'ébullition comprend un anneau à ressort (230) entourant la surface inférieure et le dispositif de chauffage comprend une ou plusieurs saillies (125) correspondant audit anneau, dans laquelle dans la position de démarrage, le récipient d'ébullition est maintenu par lesdites saillies.

11. Machine à café selon la revendication 10, dans laquelle lesdits moyens sont configurés pour faire descendre le récipient d'ébullition, forçant ainsi la partie de confinement de liquide du récipient au-delà de l'anneau à ressort autour de la surface inférieure du récipient de sorte que la surface inférieure du récipient est en contact avec le dispositif de chauffage.

12. Machine à café selon l'une quelconque des revendications précédentes, dans laquelle la au moins une chambre d'ébullition comprend en outre :
un capteur de trop-plein pour détecter le débordement du récipient d'ébullition.

13. Machine à café selon la revendication 12, dans laquelle la au moins une chambre d'ébullition comprend en outre :
un couvercle (112) pour couvrir le récipient d'ébullition,
dans laquelle le capteur de trop-plein est prévu au niveau du couvercle de la chambre.

14. Machine à café selon la revendication 12 ou la revendication 13, dans laquelle le capteur de trop-plein est un capteur de capacitance (170) pour détecter la capacitance entre le dispositif de chauffage et le capteur de capacitance.

15. Machine à café selon l'une quelconque des revendications 12 à 14, comprenant en outre un capteur de température (160) au niveau du couvercle de la chambre pour détecter la température de la vapeur sortant du récipient d'ébullition et un organe de commande pour commander un processus d'ébullition, dans laquelle l'organe de commande est adapté pour arrêter le processus d'ébullition lorsque le capteur de température détecte que la vapeur a atteint une température prédéterminée ou lorsque le capteur de trop-plein détecte le trop-plein.
